# EUROPÄISCHE PATENTSCHRIFT

(11) **EP 3 339 820 B1**
(45) Veröffentlichungstag und Bekanntmachung des Hinweises auf die Patenterteilung: **12.12.2018**
(21) Anmeldenummer: 16206060.2
(22) Anmeldetag: 22.12.2016
(51) Int. Cl.: G01J 1/44, G01S 7/486, G01J 1/42, G06K 7/10, H04B 10/61, H04B 10/69

(54) **LICHTEMPFÄNGER UND VERFAHREN ZUM AUSLESEN VON LAWINENPHOTODIODEN**
LIGHT RECEIVER AND A METHOD FOR READING OUT AVALANCHE PHOTODIODES
RÉCEPTEUR DE LUMIÈRE ET PROCÉDÉ DE LECTURE DE PHOTODIODES À AVALANCHE

(43) Veröffentlichungstag der Anmeldung: 27.06.2018
(73) Patentinhaber: Sick AG, 79183 Waldkirch (DE)
(72) Erfinder: Clemens, Klaus, 79367 Weisweil (DE); Hug, Gottfried, 79183 Waldkirch (DE); Seitz, Stefan, 79341 Kenzingen (DE)

(56) Entgegenhaltungen:
- EP-A1- 2 728 373
- WO-A1-2016/099617
- WO-A1-2016/166002
- WO-A2-2009/022166
- KR-B1- 101 381 392
- US-B1- 8 188 418
- SADIGOV A ET AL: "A new detector concept for silicon photomultipliers", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NL, Bd. 824, 12. November 2015 (2015-11-12), Seiten 135-136, XP029531292, ISSN: 0168-9002, DOI: 10.1016/J.NIMA.2015.11.013

## Beschreibung

Die Erfindung betrifft einen Lichtempfänger mit einer Vielzahl von Lawinenphotodiodenelementen im Geiger-Modus und ein Verfahren zum Auslesen von Lawinenphotodiodenelementen im Geigermodus nach dem Oberbegriff von Anspruch 1 beziehungsweise 15.

Ein Lichtempfänger hat die Funktion, aus einfallendem Empfangslicht ein elektrisches Signal zu erzeugen. Die Nachweisempfindlichkeit einfacher Photodioden genügt in vielen Anwendungsfällen nicht. In einer Lawinenphotodiode (APD, Avalanche Photo Diode) löst das einfallende Licht einen kontrollierten Lawinendurchbruch (Avalanche Effect) aus. So werden die von einfallenden Photonen erzeugten Ladungsträger vervielfacht, und es entsteht ein Photostrom, der zu der Lichtempfangsintensität proportional, dabei aber wesentlich größer ist als bei einer einfachen PIN-Diode. Im sogenannten Geiger-Modus ist die Lawinenphotodiode oberhalb der Durchbruchspannung vorgespannt, so dass bereits ein einziger, durch ein einzelnes Photon freigesetzter Ladungsträger eine Lawine auslösen kann, die dann aufgrund der hohen Feldstärke sämtliche verfügbaren Ladungsträger rekrutiert. Die Lawinenphotodiode zählt somit wie der namensgebende Geigerzähler Einzelereignisse. Lawinenphotodioden im Geiger-Modus werden auch als SPAD (Single-Photon Avalanche Diode) bezeichnet.

Die hohe Strahlungsempfindlichkeit von SPADs wird in vielen Anwendungen genutzt. Dazu zählen die Medizintechnik mit CT, MRT oder Blutanalysen, die optische Messtechnik einschließlich Spektroskopie, Entfernungsmessung und dreidimensionaler Bildgebung, die Strahlendetektion in der Kernphysik oder die Verwendungen in Teleskopen für die Astrophysik.

Geiger-APDS oder SPADs sind also sehr schnelle, hochempfindliche Photodioden auf Halbleiterbasis. Ein Nachteil der hohen Empfindlichkeit ist, dass nicht nur ein Nutzlichtphoton, sondern auch ein schwaches Störereignis durch Fremdlicht, optisches Übersprechen oder Dunkelrauschen den Lawinendurchbruch auslösen kann. Dieses Störereignis trägt dann mit dem gleichen relativ starken Signal zum Messergebnis bei wie das empfangene Nutzlicht und ist davon auch aus dem Signal heraus nicht unterscheidbar. Anschließend bleibt die Lawinenphotodiode für eine Totzeit von ca. 5 bis 100 ns unempfindlich und fällt solange für weitere Messungen aus. Deshalb ist es üblich, mehrere SPADs zusammenzuschalten und statistisch auszuwerten.

Um das elektrische Signal tatsächlich nutzen zu können, muss es aus dem SPAD-Detektorelement herausgelesen werden. Herkömmliche Ausleseschaltungen sind jedoch langsam, können also mit hochfrequenten Signalen nicht umgehen. Außerdem werden in vielen bekannten Anwendungen die Signale der SPADs einfach zusammengefasst. Damit ist es jedoch nicht möglich, den jeweiligen Lichtempfang den auslösenden SPADs zuzuordnen.

Die WO 2011/117309 A2 schlägt vor, neben der Anode und Kathode für das Anlegen der Vorspannung eine dritte Elektrode an dem SPAD-Detektor vorzusehen, über welche der Geigerstrom kapazitiv ausgekoppelt wird. Dadurch soll verhindert werden, dass das Auslesen durch Schaltelemente der Vorspannung (Bias) verzögert wird. Mit dem eigentlichen Auslesen befasst sich das Dokument aber nicht.

Der Artikel Sadigov, A., et al. "A new detector concept for silicon photomultipliers." Nuclear Instruments and Methods in Physics Research Section A: Accelerators, Spectrometers, Detectors and Associated Equipment 824 (2016): 135-136 offenbart ein Lawinenphotodiodenelement für den Betrieb im Geiger-Modus, das zusätzlich zum Standardausgang einen zusätzlichen Ausgang aufweist. Dazu weist das Lawinenphotodiodenelement einen Transitor auf, der die Verbindung zwischen Lawinenphotodiode und zusätzlichem Ausgang bildet. Dieser Transistor schaltet ein, wenn bei einem Lawinenereignis die Spannung über dem Löschwiderstand einen gewissen Pegel erreicht, und wieder aus, wenn die Spannung gegen Ende des Lawinenereignisses wieder absinkt. Während der Transistor eingeschaltet ist, wird ein im Vergleich zum Geigerstrom verstärkter Transistorstrom erzeugt, der an dem zusätzlichen Ausgang abgegriffen werden kann.

In der EP 2 728 373 A1 wird ein verbesserter Schaltkreis für ein TOF-Pixel (Time of Flight) auf Basis eines SPADs vorgestellt. Der Schaltkreis umfasst mehrere Stufen. Die erste Stufe ist ein SPAD. Die zweite Stufe sorgt mittels Transistoren für ein Gating, welches das Pixel nach Detektion eines ersten Photons ausschaltet, damit die bereits gemessene Lichtlaufzeit bis zu einem Reset erhalten bleibt. Weitere Stufen messen mit einem TAC die Zeit zwischen einem Enable-Signal synchron mit Aktivierung einer Lichtquelle und der Detektion eines Photons in dem SPAD. Die letzte Stufe ist eine Auslesestufe mit einem Ausgang.

Die KR 101 381 392 B1 befasst sich mit einem SPAD-Schaltkreis zum Reduzieren eines sogenannten Nachpulses. Das SPAD wird periodisch mittels Gating aktiviert, indem eine Versorgungsspannung schaltbar nur während eines Gating-Signals angelegt ist. Ein Lawinenereignis schaltet das Gating-Signal ab, so dass insbesondere nach Detektion eines Photons das SPAD deaktiviert ist. In diesem deaktivierten Zustand sorgt eine mit dem SPAD verbundene Pulsentladungseinheit dafür, dass für den Nachpuls verantwortliche, noch verbleibende Ladungsträger in der SPAD vor dem nächsten Gate-Signal abfließen.

Aus WO 2009/022166 A2 ist eine SPM-Schaltung (Silicon Photomultiplier) bekannt, die mindestens ein Pixel mit mehreren Mikrozellen aufweist, die jeweils als Photodiode im Geiger-Modus ausgebildet sind. Es werden verschiedene Beschaltungen vorgeschlagen, um die Schalt- und Erholzeit der Mikrozellen zu minimieren, indem am Verbindungsknoten ein im Wesentlichen konstantes Potential aufrechterhalten wird. In einer Ausführungsform ist dafür ein Transistor vorgesehen.

Es ist daher Aufgabe der Erfindung, das Auslesen einer Vielzahl von Lawinenphotodioden zu verbessern.

Diese Aufgabe wird durch einen Lichtempfänger mit einer Vielzahl von Lawinenphotodiodenelementen im Geiger-Modus und ein Verfahren zum Auslesen von Lawinenphotodiodenelementen im Geiger-Modus nach Anspruch 1 beziehungsweise 15 gelöst. Die Lawinenphotodiodenelemente werden in mindestens zwei Gruppen, möglicherweise auch zahlreiche kleine Gruppen oder sogar einzelne Lawinenphotodiodenelemente unterteilt. Jeder Gruppe oder sogar jedem Lawinenphotodiodenelement ist eine Ausleseschaltung zugeordnet, um den Geigerstrom auszulesen. Die Erfindung geht dann von dem Grundgedanken aus, in der Ausleseschaltung eine Umschaltung vorzusehen, um die zugeordneten Lawinenphotodiodenelemente unterschiedlich zu behandeln. Der Geigerstrom oder ein dem Geigerstrom entsprechender Messstrom kann deshalb wahlweise einem Messpfad oder einem Ausblendungspfad zugeführt werden. So kann über den Ausblendungspfad eine elektronische Blende erzeugt werden, die wie eine optische Blende gezielt bestimmte Lawinenphotodiodenelemente und damit Bereiche des Lichtempfängers auf den Ausblendungspfad schaltet. Dadurch sind diese Bereiche stummgeschaltet oder werden jedenfalls anders ausgewertet als Lawinenphotodiodenelemente, deren Ausleseschaltung auf den Messpfad leitet.

Die Erfindung hat den Vorteil, dass durch Nutzen der elektronischen Blende die Empfangsoptik deutlich vereinfacht oder sogar verzichtbar wird. Dadurch entstehen mehr Freiheitsgrade bei der Platzierung von Komponenten eines Sensors, in dem der Lichtempfänger genutzt wird, und die Miniaturisierung wird vereinfacht. Die Toleranzkette wird verkürzt, zugleich der Ausgleich von Toleranzen vereinfacht, und die Prozesssicherheit gesteigert.

Eine elektronische Blende kann rein elektronisch justiert werden, mechanische Justierung und Vorrichtungen dafür entfallen ebenso wie mechanische Sicherungen gegen Dejustage. Es ist nicht erforderlich, für eine Justierung physischen Zugang zu erlangen, und sie ist wesentlich leichter automatisierbar. Eine elektronische Blende kann Blendenmuster erzeugen, die durch eine optische Blende nur schwer oder gar nicht erreichbar wären. Zumindest in größeren Klassen oder Gruppen wird erkennbar, welche Lawinenphotodioden beziehungsweise Gruppen auf ein Lichtsignal angesprochen haben.

Die Ausleseschaltung kann eine sehr schnelle Signalerkennung mit extrem kurzen Umschaltzeiten leisten, so dass auch hochfrequente Signale verarbeitet werden. Dazu genügt eine Niederspannungsebene wie etwa 3V-Technik. Die Integration von Lawinenphotodiodenelementen und Ausleseschaltung in einem Halbleiterprozess ist einfach und kostengünstig möglich. Zugleich bietet die elektronische Blende eine hohe Anwendungsvielfalt, und der Lichtempfänger kann damit durch hohe Stückkosten auch zu geringen Kosten hergestellt werden.

Der Ausblendungspfad ist bevorzugt dafür ausgebildet, den Geigerstrom oder den Messstrom ohne Auslesen abfließen zu lassen. Das ist das elektronische Gegenstück zu dem optischen Effekt einer Blende. Einfallendes Licht auf Lawinenphotodiodenelemente, deren Ausleseschaltungen den Geigerstrom oder Messstrom dem Ausblendungspfad zuführen, erzeugt kein gemessenes Signal und geht somit praktisch in der elektronischen Blende verloren. Die elektronische Blende muss aber nicht so wirken. Es ist alternativ auch möglich, in dem Ausblendungspfad den Geigerstrom oder Messstrom zu bestimmen. Diese Messinformation kann beispielsweise dazu dienen, die elektronische Blende weiter anzupassen, also die Ausleseschaltung von Lawinenphotodiodenelementen umzuschalten, oder Erkenntnisse über das einfallende Signal und beispielsweise Fremdlichtanteile zu gewinnen. Prinzipiell kann der Ausblendungspfad als zweiter Messpfad fungieren und gar keine eigentliche Blendenwirkung haben.

Für die Ausleseschaltung und das zugehörige einzelne Lawinenphotodiodenelement oder die zugehörige Gruppe von Lawinenphotodiodenelementen ist bevorzugt eine Signalabgriffschaltung vorgesehen, die ein aktives Kopplungselement mit einem Eingang, der mit den Lawinenphotodiodenelementen verbunden ist, und einem Ausgang aufweist, das den Geigerstrom am Eingang auf den in Verlauf und Pegel dem Geigerstrom entsprechenden Messstrom abbildet, wobei der Eingang für den Geigerstrom einen virtuellen Kurzschluss gegen ein Potential (Masse; -U_{BE}; U_{const}-U_{BE}) bildet und der Ausgang von dem Eingang entkoppelt ist. Vorzugsweise gibt es so viele Ausleseschaltungen wie Signalabgriffschaltungen, welche die vorhandenen Lawinenphotodiodenelemente in gleicher Weise gruppieren und zuordnen. Die Ausleseschaltung kann insbesondere direkt oder mittelbar mit den Lawinenphotodiodenelementen und der Signalabgriffschaltung verbunden sein. Der Signalabgriff nutzt ein aktives Auskoppelverfahren, das hoch empfindlich und dabei sehr schnell ist. Das Lawinenphotodiodenelement ist dabei wechselspannungsmäßig praktisch kurzgeschlossen, so dass es bei einem Auslösen der Lawine nur zu kleinen Spannungsänderungen zwischen den Anschlüssen kommt, damit auch parasitäre Kapazitäten der Lawinenphotodiodenelemente kaum umgeladen werden und sich somit nur geringfügig auf die Ausgangssignalqualität und Bandbreite auswirken.

Ein derartiger aktiver Signalabgriff ist für die Erfindung ganz besonders vorteilhaft und soll deshalb noch weiter erläutert werden. Die Lawinenphotodiodenelemente im Geiger-Modus oder SPADs wirken praktisch wie hoch lichtempfindliche Schalter, die durch Lichteinfall einen Geigerstrom auslösen. Herkömmliche Formen des Signalabgriffs sind aufgrund unzureichend optimierter Schaltungen nicht in der Lage, die sehr schnellen Abläufe bei einem Lawinendurchbruch im Messsignal widerzuspiegeln. Deshalb ist das aktive Kopplungselement vorgesehen und nicht lediglich passive Elemente wie ein Widerstand oder ein Transformator. Das aktive Kopplungselement bietet für den Geigerstrom an seinem Eingang einen virtuellen Kurzschluss gegen ein vorzugsweise festes Potential. Praktisch wird dies nur bis auf wenige Ohm oder Bruchteile von einem Ohm gelingen. Es bedeutet aber, dass der Geigerstrom nahezu vollständig aus dem Detektor, also dem jeweils auslösenden Lawinenphotodiodenelement, in die jeweilige Signalabgriffschaltung fließt und über den Kurzschluss abfließen kann, ganz anders als beispielsweise bei einem einfachen Messwiderstand. Deshalb kann die durch die Vielzahl der Lawinenphotodiodenelemente gebildete parasitäre Kapazität nicht mehr wie ein Tiefpass wirken, und es finden dort praktisch keine Umladevorgänge mehr statt. Die schnellen hochfrequenten Geigerströme können im Wesentlichen ungehindert zum verstärkenden Element abfließen. Weiter erzeugt das Kopplungselement an seinem Ausgang aktiv einen Messstrom, der dem Geigerstrom entspricht und damit insbesondere den gleichen zeitlichen Verlauf zeigt. Das aktive Kopplungselement kann außerdem durch eine Verstärkung dafür sorgen, dass der Messstrom einen für die weitere Verarbeitung geeigneten Pegel aufweist. Zugleich wird der Messstrom durch das aktive Kopplungselement nahezu vollständig von dem Geigerstrom entkoppelt. Die weitere Verarbeitung des Messstroms wirkt daher nicht auf den Geigerstrom zurück. Da der mit dem Detektionsereignis verfügbare Strom praktisch vollständig in das aktive Kopplungselement fließen kann, ergibt sich eine optimale Verstärkung mit sehr gutem Signal/Rausch-Verhältnis.

Der Verlauf des Messstroms weicht dank des aktiven Kopplungselements bevorzugt erst für Änderungen im höheren Gigahertzbereich, insbesondere oberhalb zwei oder drei GHz, durch frequenzbedingte Verluste erheblich von dem Geigerstrom ab. Erst für Frequenzen des einfallenden Lichtsignals oberhalb von einigen GHz zeigt die Abbildung des Geigerstroms auf den Messstrom deutlich spürbare frequenzbedingte Verluste. Im Gegensatz dazu fällt bei herkömmlichen Lösungen das Messsignal schon bei mittleren Frequenzen von einigen hundert MHz um mehrere Dekaden ab. Somit gelingt es mit dem aktiven Kopplungselement, auch sehr kurze Pulse und Flanken im Sub-Nanosekundenbereich aufzulösen.

Das Kopplungselement ist vorzugsweise dafür ausgebildet, die eingangsseitige Spannung konstant zu halten. Wenn nun ein Geigerstrom fließt, muss zum Aufrechthalten der Spannung vom Ausgang her ein Ausgangsstrom durch das Kopplungselement fließen. Auf diese Weise wird der Geigerstrom am Eingang auf einen entsprechenden Messstrom am Ausgang abgebildet.

Das Kopplungselement weist bevorzugt einen Signalabgriff-Transistor auf. Insbesondere ist dies genau ein Signalabgriff-Transistor, und nochmals bevorzugt besteht das Kopplungselement aus dem Signalabgriff-Transistor. Damit ist das Kopplungselement einstufig, nicht mehrstufig wie beispielsweise ein herkömmlich zum Auslesen eingesetzter Transimpedanzverstärker. Die technische Ausführung des Signalabgriff-Transistors ist nicht beschränkt und umfasst Bipolartransistoren oder Feldeffekttransistoren in ihren verschiedenen Bauformen. Allerdings sollte vorzugsweise ein Hochfrequenztransistor verwendet werden, um die erfindungsgemäßen Vorteile einer großen Bandbreite des Lichtempfängers tatsächlich zu erzielen.

Der Signalabgriff-Transistor ist vorzugsweise in Basisschaltung oder Gateschaltung betrieben, indem der Eingang mit dem Emitter oder mit Source, der Ausgang mit dem Kollektor oder mit Drain und die Basis oder das Gate mit einem festen Potential verbunden ist. Die jeweils alternativ genannten Begriffe beziehen sich einerseits auf einen Bipolartransistor und andererseits auf einen FET, um nochmals deutlich herauszustellen, dass der Transistor nicht auf eine bestimmte Technologie festgelegt sein soll. Obwohl prinzipiell auch die viel üblichere Emitterschaltung denkbar wäre, ist die Basisschaltung durch einen niedrigen Eingangswiderstand, eine höhere Bandbreite und einen flacheren Frequenzgang überlegen.

Die Ausleseschaltung ist bevorzugt mit dem Eingang verbunden. Dies ermöglicht eine besonders einfache Ausleseschaltung, die auf den Geigerstrom der Lawinenphotodiodenelemente zugreifen kann.

Die Ausleseschaltung weist bevorzugt nur einen Auslese-Transistor auf. Das ist eine besonders einfache Ausleseschaltung, die besonders geeignet ist, wenn eine große Anzahl von Ausleseschaltungen für kleine Gruppen oder sogar einzelne Lawinenphotodiodenelemente vorgesehen sind. Wie schon zu dem Signalabgriff-Transistor erläutert, sind auch für den Auslese-Transistor verschiedenste technische Ausführungen möglich.

Vorzugsweise ist die Basisspannung des Signalabgriff-Transistors oder des Auslese-Transistors zur Umschaltung zwischen Messpfad und Ausblendungspfad anpassbar. Je nachdem, wo das höhere Basispotential anliegt, verlässt der andere Transistor den Linearbetrieb und sperrt. Deshalb kann über die Basisspannung gesteuert werden, ob der Geigerstrom über den Signalabgriff-Transistor in die Signalabgriffschaltung und weiter in den Messpfad fließt oder über den Auslese-Transistor in den Ausblendungspfad. Vorzugsweise bleibt das Basispotential am Signalabgriff-Transistor konstant, um eine ungestörte Messung zu erhalten, und die Anpassung des Basispotentials erfolgt am Auslese-Transistor.

Die Ausleseschaltung ist vorzugweise mit dem Ausgang verbunden. In dieser Ausführungsform fließt der Geigerstrom zunächst in die Signalabgriffschaltung und wird dort in den Messstrom abgebildet. Die Weiterverarbeitung des Messstroms in der Ausleseschaltung und insbesondere die Umschaltung zwischen Messpfad und Ausblendungspfad hat dann wegen der Entkopplung durch die Signalabgriffschaltung keine Rückwirkung auf den Geigerstrom und die Lawinenphotodiodenelemente, die bei einer Ausleseschaltung am Eingang nicht gänzlich ausgeschlossen werden können.

Die Ausleseschaltung weist bevorzugt mindestens zwei parallel geschaltete Auslese-Transistoren jeweils in Kaskodenschaltung mit dem Signalabgriff-Transistor auf. Die Auslese-Transistoren bilden jeweils einen Verzweigungspunkt, an den sich der Messpfad beziehungsweise der Ausblendungspfad anschließt. Die Umschaltung erfolgt über das Basispotential. Der Messstrom fließt über den Auslese-Transistor mit dem höheren Basispotential, wohingegen der andere Auslese-Transistor den Linearbetrieb verlässt und sperrt. Dadurch, dass zwei Auslese-Transistoren vorhanden sind, können die Sperrspannungsanforderungen der beiden Auslese-Transistoren sowie die des Signalabgriffs-Transistors herabgesetzt werden, so dass sich parasitäre Effekte und vor allem parasitäre Kapazitäten verringern und ein nochmals verbessertes Hochfrequenzverhalten erreicht wird.

In dem Ausblendungspfad ist bevorzugt ein Messabgriff vorgesehen. Der Geigerstrom oder Messstrom geht also nicht einfach verloren, sondern wird auch bestimmt, um zusätzliche Messinformation zu gewinnen, sei es zur Anpassung der Blende oder sogar als zusätzlicher Messkanal.

Die Ausleseschaltung weist mindestens einen weiteren Messpfad auf. Hier wird nicht der Ausblendungspfad als Messpfad genutzt, obwohl das weiterhin möglich ist, sondern ein dritter Pfad eröffnet. Prinzipiell sind auch noch mehr Messpfade, also ein vierte Pfad und weitere Pfade denkbar, wenn dafür die ansteigende Komplexität der Ausleseschaltung in Kauf genommen wird. Vorzugsweise ist für jeden Messpfad jeweils ein Auslese-Transistor vorgesehen, wobei die Auswahl desjenigen Messpfades, in welchen der Geigerstrom oder der Messstrom fließt, wiederum über das Basispotential erfolgt. Weitere Messpfade sind sowohl bei Anschluss der Ausleseschaltung am Eingang wie am Ausgang der Signalabgriffschaltung möglich. Bei Anordnung am Ausgang gibt es dementsprechend Auslese-Transistoren für den Ausblendungspfad, den Messpfad und den weiteren Messpfad. Bei Anordnung am Eingang fungieren die Transistoren des Messpfades und des weiteren Messpfades als Auslese-Transistoren und als Signalabgriff-Transistoren, und gemeinsam mit dem Auslese-Transistor des Ausblendungspfades konkurrieren sie über das höchste Basispotential um den Geigerstrom. Anwendungsbeispiele für mehrere Messkanäle sind ein eigentlicher Mess- und ein Referenzkanal, ein Nah- und ein Fernbereich oder auch eine Aufteilung nach Wellenlängen insbesondere bei Verwendung von mehreren Sendern unterschiedlicher Wellenlängen.

Messpfad und weiterer Messpfad weisen bevorzugt jeweils einen Messabgriff mit unterschiedlicher Abschwächung des Geigerstroms oder Messstroms auf. Dies ist ein weiteres Anwendungsbeispiel, in dem der weitere Messkanal zur Signalanpassung in einem großen Dynamikbereich genutzt wird. Beispielsweise wird in dem Messpfad der volle Geigerstrom oder Messstrom verarbeitet, während der weitere Messpfad eine Dämpfung vorsieht. Wenn im Messpfad eine Übersteuerung droht oder erkannt worden ist, kann dann auf den weiteren Messpfad ausgewichen werden, beziehungsweise umgekehrt bei einem zu schwachen Pegel.

Messpfad und weiterer Messpfad weisen bevorzugt eine Spannungsabschwächerschaltung oder unterschiedliche Arbeitsimpedanzen auf. Das sind zwei beispielhafte Möglichkeiten, stärkere und schwächere Geigerströme beziehungsweise Messströme in jeweils eigenen Pfaden zu verarbeiten.

Die Lawinenphotodiodenelemente weisen bevorzugt eine Elektrode zum kapazitiven Auskoppeln des Geigerstroms auf, wobei die Ausleseschaltung mit der Elektrode verbunden ist. Die Verbindung ist direkt oder indirekt über die zwischengeschaltete Signalabgriffschaltung. Die Elektrode zum Auskoppeln ist vorzugsweise eine dritte Elektrode zusätzlich zu einer ersten Elektrode und einer zweiten Elektrode, über welche die Lawinenphotodiodenelemente vorgespannt sind, um die Bias- oder Vorspannung bereitzustellen, aus der sich der Lawinendurchbruch speist. Durch die von der Bereitstellung der Vorspannung unabhängige Elektrode ist ein schnelleres Auslesen möglich. Die Elektrode ist vorzugsweise zwischen dem Lawinenphotodiodenelement und der Ladeeinheit angeschlossen. Vorzugsweise ist der Eingang mit der dritten Elektrode verbunden. Damit nutzt die Signalabgriffschaltung die bereitgestellte Elektrode zum schnellen Auslesen. Allerdings sind nachteilige Effekte der Schaltkreise zum Vorspannen auf das Auslesen durch das erfindungsgemäße Kopplungselement ohnehin unterdrückt. Insofern ist ein schnelles Auslesen weitgehend unabhängig von der dritten Elektrode, die also alternativ nicht vorgesehen oder nicht genutzt sein kann. Die Signalabgriffschaltung beziehungsweise die Ausleseschaltung ist dann mit der ersten Elektrode oder der zweiten Elektrode verbunden.

In vorteilhafter Weiterbildung ist ein optoelektronischer Sensor mit mindestens einem erfindungsgemäßen Lichtempfänger vorgesehen, wobei der Sensor zur Entfernungsmessung nach einem Lichtlaufzeitverfahren und/oder als Codeleser und/oder zur Datenübertragung ausgebildet ist. Die Entfernung kann durch Triangulation bestimmt werden, wie in einem Triangulationstaster oder einer Stereokamera. Vorzugsweise erfolgt die Entfernungsmessung nach einem Lichtlaufzeitverfahren. In einem Pulslaufzeitverfahren wird mit einem Lichtsender ein kurzer Lichtpuls ausgesandt und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt, wobei die Phasenverschiebung ebenfalls ein Maß für die Lichtlaufzeit ist. Das Lichtlaufzeitverfahren kann in einem eindimensionalen Entfernungstaster, einem Laserscanner oder einem Bildsensor einer 3D-Kamera nach dem Lichtlaufzeitprinzip genutzt werden. Weitere nicht abschließende Anwendungen des Lichtempfängers in einem optoelektronischen Sensor sind Codelesen oder Datenübertragung oder Kombinationen dieser Anwendungen in einem Sensor.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Darstellung einer Signalabgriffschaltung für ein Lawinenphotodiodenelement mit einem aktiven Kopplungselement;
- Fig. 2: eine vereinfachte Blockdarstellung entsprechend Figur 1;
- Fig. 3: eine Blockdarstellung einer Ausführungsform einer Ausleseschaltung zum wahlweisen Umschalten zwischen einem Messpfad und einem Ausblendungspfad vor dem Signalabgriff;
- Fig. 4: eine Darstellung einer beispielhaften Schaltung für die Ausleseschaltung gemäß Figur 3;
- Fig. 5: eine Blockdarstellung einer Ausführungsform einer Ausleseschaltung zum wahlweisen Umschalten zwischen einem Messpfad und einem Ausblendungspfad nach dem Signalabgriff;
- Fig. 6: eine Darstellung einer beispielhaften Schaltungsanordnung für die Ausleseschaltung gemäß Figur 5;
- Fig. 7: eine Blockdarstellung einer Ausführungsform einer Ausleseschaltung mit einem weiteren Messpfad bei Umschalten vor dem Signalabgriff;
- Fig. 8: eine Blockdarstellung einer Ausführungsform einer Ausleseschaltung mit einem weiteren Messpfad bei Umschalten nach dem Signalabgriff;
- Fig. 9: eine Darstellung einer beispielhaften Schaltungsanordnung zum Umschalten zwischen einem Messpfad, einem weiteren Messpfad mit gedämpftem Signal und einem Ausblendungspfad;
- Fig. 10: eine Darstellung einer alternativen Schaltungsanordnung zum Umschalten zwischen einem Messpfad, einem weiteren Messpfad und einem Ausblendungspfad; und
- Fig. 11: ein Beispiel einer Unterteilung der Lawinenphotodiodenelemente in einen Messbereich, einen weiteren Messbereich und einen Blendenbereich.

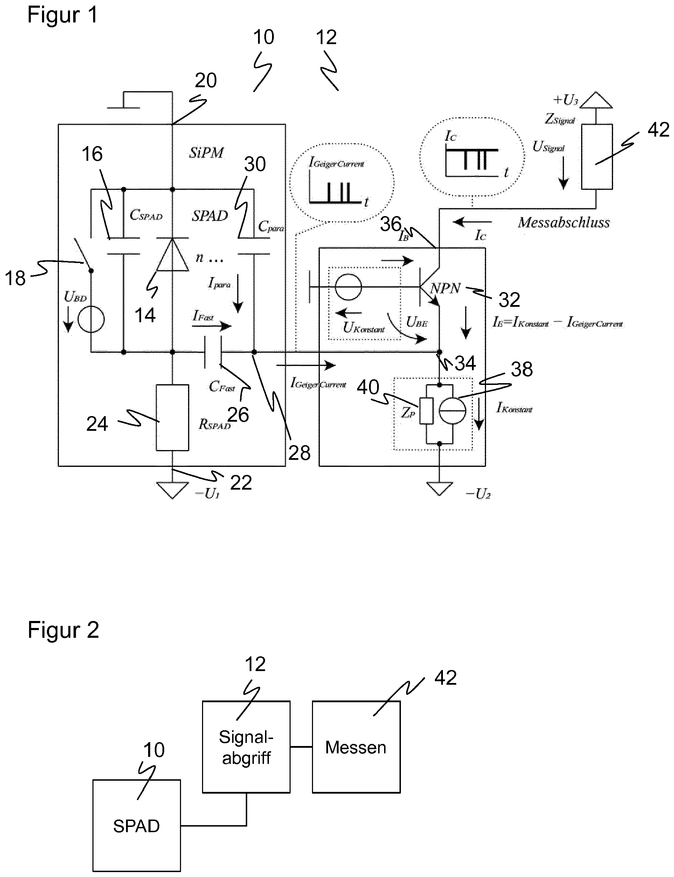

Figur 1 zeigt als Ausgangspunkt eine Darstellung eines Lawinenphotodiodenelements 10 mit einer Signalabgriffschaltung 12, die für Empfindlichkeit und Bandbreite optimiert ist. Die Erfindung betrifft eine im Anschluss unter Bezugnahme auf die Figuren 2 bis 11 erläuterte Ausleseschaltung, die zwar auch ohne Signalabgriffschaltung 12 für mindestens ein Lawinenphotodiodenelement 10 verwendet werden kann, vorzugsweise jedoch die Signalabgriffschaltung 12 ergänzt.

Das Lawinenphotodiodenelement 10 ist als Ersatzschaltbild gezeigt. Der eigentliche Aufbau des Halbleiterbauteils wird als bekannt vorausgesetzt und nicht dargestellt. Ein entsprechendes Bauelement kann beispielsweise in einem CMOS-Prozess hergestellt werden. Die Durchbruchspannung der Lawinenphotodiodenelemente 10 ist deutlich geringer als bei herkömmlichen Lawinenphotodioden, beträgt beispielsweise höchstens 50V oder 30V.

Das Lawinenphotodiodenelement 10 zeigt zum einen das Verhalten einer Diode 14. Es hat außerdem eine Kapazität, die durch den parallel geschalteten Kondensator 16 repräsentiert wird. Ein Lawinendurchbruch wird durch mindestens ein auftreffendes Photon ausgelöst, wobei dieser Vorgang wie ein Schalter 18 wirkt. Im Bereitschaftszustand liegt über der Diode 14 zwischen einem Anschluss 20 und einem Anschluss 22 eine Spannung oberhalb der Durchbruchspannung. Erzeugt dann ein einfallendes Photon ein Ladungsträgerpaar, so schließt dies gleichsam den Schalter 18, so dass das Lawinenphotodiodenelement 10 mit Ladungsträgern geflutet wird und ein sogenannter Geigerstrom fließt. Neue Ladungsträger entstehen aber nur, solange das elektrische Feld stark genug bleibt. Wird der Kondensator 16 so weit entladen, dass die Durchbruchspannung unterschritten ist, so kommt die Lawine von selbst zum Erliegen ("passive quenching"). Danach wird der Kondensator 16 aus den Anschlüssen 20, 22 über einen Widerstand 24 aufgeladen, bis wieder eine Spannung über der Durchbruchspannung an der Diode 14 anliegt. Es gibt alternative Ausgestaltungen, in denen die Lawine von außen erkannt und daraufhin eine Entladung unter die Durchbruchspannung ausgelöst wird ("active quenching").

Während der Lawine steigt das Ausgangssignal rapide und unabhängig von der Intensität des auslösenden Lichts auf einen Maximalwert an und fällt dann nach dem Löschen der Lawine wieder ab. Die Zeitkonstante des Abfalls, welche eine Totzeit des Lawinenphotodiodenelements 10 angibt, liegt typischerweise im Bereich einiger bis einiger zehn Nanosekunden. Die Totzeit ist keine absolute Totzeit, denn sobald die Vorspannung groß genug ist, um eine Lawine zu unterstützen, kann das Ausgangssignal auch wieder ansteigen, allerdings nicht im gleichen Maße wie aus dem Bereitschaftszustand. Der Verstärkungsfaktor beträgt bis zu 10⁶ und ergibt sich im Wesentlichen aus der maximalen Anzahl von Ladungsträgern, die von der Lawine in dem Lawinenphotodiodenelement 10 rekrutiert werden können.

Die Funktion der Signalabgriffschaltung 12 ist, aus dem Geigerstrom während eines Lawinendurchbruchs ein Messsignal möglichst unter Ausnutzung des vollen Stromflusses abzuleiten, und zwar so, dass auch hochfrequente Anteile erhalten bleiben und ein hohes Signal/Rausch-Verhältnis erreicht wird. Die Signalauskopplung erfolgt vorzugsweise kapazitiv über einen Koppelkondensator 26. In der dargestellten Ausführungsform weist das Lawinenphotodiodenelement 10 einen eigenen Anschluss 28 zum Auslesen eines Messsignals aus, wobei dieser Anschluss 28 über den Koppelkondensator 26 verbunden ist. Es sind auch Lawinenphotodiodenelemente 10 denkbar, die den eigenen Anschluss 28 nicht aufweisen. Dann übernimmt einer der Anschlüsse 20, 22 dessen Funktion mit, und vorzugsweise ist ein Kondensator parallel zu dem Widerstand 24 für ein verbessertes Hochfrequenzverhalten vorgesehen.

In einem Lichtempfänger ist vorzugsweise eine Vielzahl von Lawinenphotodiodenelementen 10 vorgesehen. Dazu kann die gesamte Anordnung gemäß Figur 1 vervielfacht werden, jedes Lawinenphotodiodenelement 10 also seine eigene Signalabgriffschaltung 12 mitbringen. Alternativ werden Lawinenphotodiodenelemente 10 zu Gruppen zusammengefasst und gemeinsam ausgelesen. Derartige in Figur 1 nicht dargestellte weitere Lawinenphotodiodenelemente bilden aus Sicht des gezeigten Lawinenphotodiodenelements 10 parasitäre Kapazitäten 30, die durch sonstige parasitäre Effekte noch erhöht sein können. Die parasitäre Kapazität 30 summiert sich aus den in praktischen Anwendungen meist zahlreichen weiteren Lawinenphotodiodenelementen und kann deshalb deutlich größer sein als die Kapazität des zugehörigen Koppelkondensators 26. Die parasitäre Kapazität 30 verhält sich wie ein Tiefpass, der hochfrequente Signale sperrt.

Die Signalabgriffschaltung 12 soll für die Erzielung hoher Geschwindigkeiten beziehungsweise Bandbreiten einen möglichst kleinen, gleichzeitig für eine hohe Empfindlichkeit einen großen Signalwiderstand aufweisen. Um diesen widersprüchlichen Anforderungen gerecht zu werden, nutzt die Signalabgriffschaltung 12 eine aktive Schaltungslösung mit einem aktiven Kopplungselement 32, das in Figur 1 als bipolarer NPN-Transistor in Basisschaltung ausgebildet ist. Andere aktive Elemente, insbesondere andere Transistoren (FET), eine andere Polarität (PNP) oder eine andere Verschaltung (Emitterschaltung) sind denkbar. Außerdem können statt einer einstufigen Schaltung auch mehrere Transistoren eingesetzt werden.

Das aktive Kopplungselement 32 hat nun mehrere erhebliche Vorteile für den Signalabgriff. Zum einen bietet es für den kapazitiv als Strompuls ausgekoppelten Geigerstrom praktisch keinen Widerstand, bildet also einen virtuellen Kurzschluss. Das wird praktisch nicht ganz erreicht, aber weniger als ein Ohm ist durchaus möglich. Dies führt dazu, dass es über der parasitären Kapazität 30 trotz der Lawine keine relevanten Spannungsänderungen und damit dort keine Umladevorgänge und keinen Stromfluss gibt. Dem aktiven Kopplungselement 32 steht daher eingangsseitig nahezu der gesamte durch den Koppelkondensator 26 fließende Geigerstrom zur Verfügung. Ohne den virtuellen Kurzschluss würden dagegen deutlich spürbare Anteile des Geigerstroms in der parasitären Kapazität 30 verloren gehen, und vor allem die schnellen, hochfrequenten Signalanteile durch das Tiefpassverhalten unterdrückt.

Zum zweiten erzeugt das aktive Kopplungselement 32 ausgangsseitig einen Messstrom, der in seinem zeitlichen Verlauf und Pegel dem Geigerstrom entspricht. Dabei kann das aktive Kopplungselement 32 den Messstrom durch seine Übertragungsfunktion auch gegenüber dem Geigerstrom gezielt verändern, um hierdurch die verfügbare Signalabgriffsleistung zu verstärken. Es steht dafür an dem Kopplungselement 32 nahezu der vollständige Strom des Lawinendurchbruchs zur Verfügung. Der Messstrom ist anschließend ausgangsseitig als Detektionsergebnis zur Weiterverarbeitung abgreifbar. Der Messstrom speist sich aus einer Stromquelle des aktiven Kopplungselements 32 und nicht aus dem Lawinenphotodiodenelement 10.

Dabei sind zum dritten Eingangskreis und Ausgangkreis voneinander entkoppelt. Die Weiterverarbeitung des Messstroms hat also, in den technischen Grenzen einer realen Entkopplung, keinerlei Auswirkungen auf den Geigerstrom. Deshalb sind praktisch beliebige Nachfolgestufen möglich, die anders als herkömmliche Signalabgriffe keine ungünstigen Rückwirkungen auf den Geigerstrom haben.

Im konkreten Beispiel der Figur 1 bildet der Emitter des aktiven Kopplungselements 32 den Eingang 34, dem von dem Anschluss 28 des Lawinenphotodiodenelements 10 der Geigerstrom zugeführt wird. Die Basis ist mit Masse oder allgemeiner einem festen Potential verbunden und damit virtuell kurzgeschlossen. Der Kollektor bildet den Ausgang 36, an dem der Messstrom bereitgestellt wird. Im Emitterkreis des Transistors befindet sich noch eine Konstantstromquelle 38 zwischen Eingang 34 und einer Versorgungsspannung -U₂. Dadurch fließt hier zu Zeiten außerhalb von Lawinendurchbrüchen ein Gleichstrom, der den Arbeitspunkt des Transistors einstellt. Die Konstantstromquelle 38 kann alternativ passiv durch einen Widerstand 40 realisiert sein oder als Kombination aus beidem, wie in Figur 1 gezeigt. Am Ausgang 36 wird der Messstrom abgegriffen. Als rein beispielhafte Umsetzung des dafür zuständigen Messpfades 42 ist hier eine einfache lineare Messimpedanz dargestellt. Der Messpfad 42 kann alternativ beliebige Messschaltungen mit aktiven und/oder passiven Elemente aufweisen. Durch die Entkopplung mittels der Signalabgriffschaltung 12 haben diese Messschaltungen im Messpfad 42 praktisch keine Rückwirkung auf die eigentliche Messung.

Figur 2 zeigt die Schaltungsanordnung der Figur 1 für einen hochempfindlichen Detektor hoher Bandbreite nochmals in einem ganz groben Blockdiagramm, in dem das mit SPAD bezeichnete Lawinenphotodiodenelement 10, die Signalabgriffschaltung 12 und der Messpfad 42 jeweils nur durch einen Funktionsblock repräsentiert ist. Dadurch soll das Verständnis für die nun zu erläuternde ergänzende Ausleseschaltung erleichtert werden.

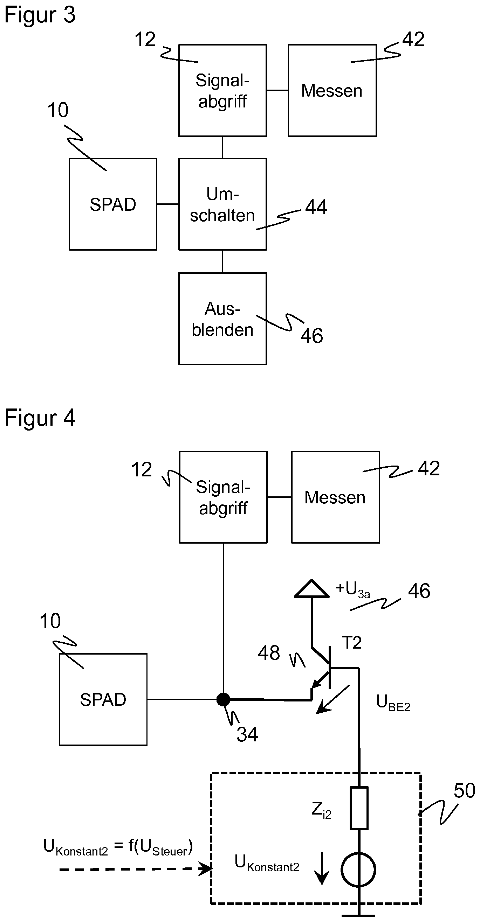

Figur 3 zeigt zunächst ein Blockdiagramm, mit dem die bisherige einzige Ausgangssignalleitung des Messpfades 42 für ein einziges Ausgangssignal erweitert wird. An das Lawinenphotodiodenelement 10 wird ein Schalterelement 44 angeschlossen, welches den Geigerstrom aus dem Lawinenphotodiodenelement 10 wahlweise sofort in einen Ausblendungspfad 46 abführt oder wie bisher mittels der Signalabgriffschaltung 12 dem Messpfad 42 zuführt. Ein Anwendungsbeispiel hierfür ist, dass in einer ersten Gruppe von Lawinenphotodiodenelementen 10 das Schalterelement 44 mit dem Ausblendungspfad 46 und in einer zweiten Gruppe mit dem Messpfad 42 verbindet. Auf diese Weise werden die Empfangssignale der ersten Gruppe elektronisch ausgeblendet.

Figur 4 zeigt ein konkretes Schaltungsbeispiel hierzu. Ein Auslese-Transistor 48 wird mit seinem Emitter an den Eingang 34 der Signalabgriffschaltung 12 angeschlossen. Das Basispotential wird über eine steuerbare Spannungsquelle 50 eingestellt. Liegt das Basispotential an dem Auslese-Transistor 48 über dem Basispotential an dem Transistor 32 der Signalabgriffschaltung 12, so geht dessen Verstärkungsfunktion verloren, was einem Ausschalten des Messpfades 42 entspricht. Der Geigerstrom wird auf den Auslese-Transistor 48 umgeleitet und fließt dort über den Ausblendungspfad 46 ab (elektronische Blende). Liegt umgekehrt das Basispotential an dem Transistor 32 höher, so fließt der Geigerstrom in die Signalabgriffschaltung 12 und der daraus erzeugte Messstrom in den Messpfad 42.

Da es auf das relative Verhältnis der Basispotentiale ankommt, kann die Steuerung alternativ zu der steuerbaren Spannungsquelle 50 auch über das Basispotential des Transistors 32 der Signalabgriffschaltung 12 erfolgen. Prinzipiell könnte der Ausblendungspfad 46 nicht als reiner Bypass zum Abfließen des Geigerstroms ausgestaltet sein, sondern weitere Schaltungselemente aufweisen, um Informationen über den Geigerstrom zu gewinnen.

Die Ausleseschaltung gemäß Figur 4, die auf einem einzigen Auslese-Transistor 48 beruht, ist besonders einfach. Das ist dann besonders vorteilhaft, wenn die Lawinenphotodiodenelemente 10 in kleinen Gruppen oder gar einzeln ausgelesen werden, weil dann zahlreiche Ausleseschaltungen benötigt werden.

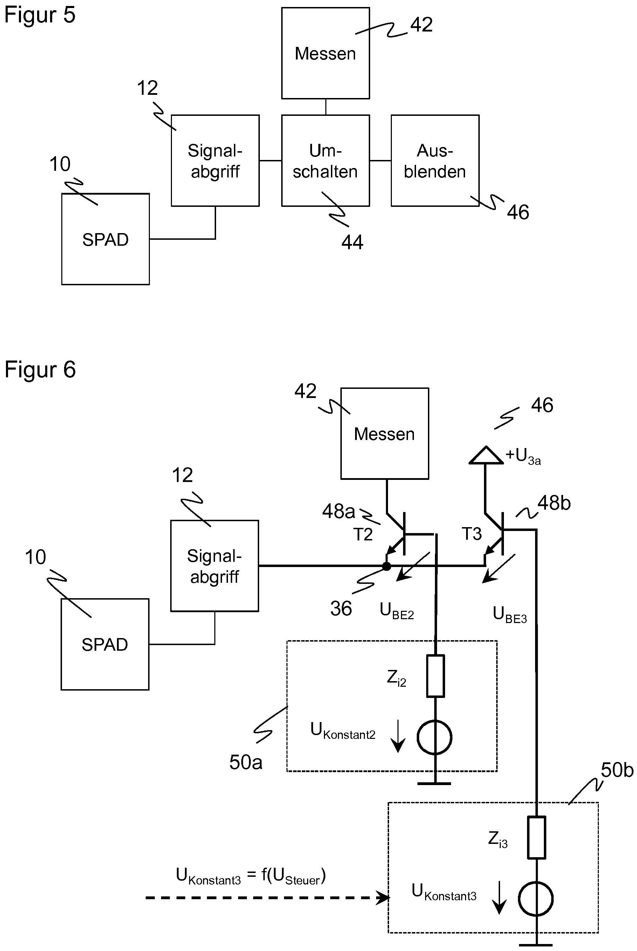

Figur 5 zeigt eine alternative Ausführungsform der Ausleseschaltung wiederum zunächst als sehr vereinfachtes Blockdiagramm. Im Unterschied zu Figur 3 ist das Schalterelement 44 zum Umschalten zwischen Messpfad 42 und Ausblendungspfad 46 hier nach der Signalabgriffschaltung 12 angeordnet. Dadurch ist die Ausleseschaltung über die Signalabgriffschaltung 12 von dem Eingang 34 und damit dem Lawinenphotodiodenelement 10 entkoppelt, stellt keine zusätzliche kapazitive Belastung und einen zusätzlichen Einkoppelpfad für Störungen dar. Das Umschalten in dem Schalterelement 44 ist praktisch ohne Rückwirkungen, da der Eingang 34 von dem Transistor 32 aktiv auf konstantem Potential gehalten wird.

Allerdings erfordert diese Robustheit gegenüber Figur 4 eine etwas aufwändigere Schaltung, wie beispielhaft in Figur 6 dargestellt. Es sind nun zwei Auslese-Transistoren 48a-b vorgesehen, die zueinander parallel jeweils in Kaskoden-Anordnung über den Ausgang 36 an den Transistor 32 der Signalabgriffschaltung 12 angeschlossen sind. Kollektorseitig ist an dem ersten Auslese-Transistor 48a der Messpfad 42 und an dem zweiten Auslese-Transistor 48b der Ausblendungspfad 46 angeschlossen. Ein in den Messpfad 42 geleiteter Messstrom wird beispielsweise durch einen Messabschluss erfasst, während ein Messstrom in dem Ausblendungspfad 46 im Sinne einer elektronischen Blende keinen Beitrag zum Auskoppelergebnis leistet. Der Ausblendungspfad 46 muss aber alternativ, wie schon mehrfach erwähnt, kein reiner Bypass sein, in dem der Messstrom abfließt, sondern auch hier können bedarfsweise Informationen über den Messstrom erfasst werden.

Wahlweise übernimmt nun der erste Auslese-Transistor 48a oder der zweite Auslese-Transistor 48b den Messstrom, nämlich den gegebenenfalls von einem Geigerstrom geprägten Kollektorstrom des Transistors 32, in den Messpfad 42 beziehungsweise den Ausblendungspfad 46. Das hängt davon ab, welcher der Auslese-Transistoren 48a-b das höhere Basispotential aufweist, wobei hier rein beispielhaft der erste Auslese-Transistor 48a eine konstante Spannungsquelle 50a aufweist und die Steuerung über eine steuerbare Spannungsquelle 50b des zweiten Auslese-Transistors 48b erfolgt, wobei die Spannungsquellen 50a-b ebenso umgekehrt angeschlossen oder beide steuerbar ausgestaltet sein könnten.

Die Kaskodenschaltung gemäß Figur 6 ermöglicht nicht nur eine verbesserte Entkopplung zu dem Lawinenphotodiodenelement 10 mittels der Signalabgriffschaltung 12, sondern auch ein nochmals verbessertes Hochfrequenzverhalten, denn die Sperrspannungs-Anforderungen der beiden Auslese-Transistoren 48a-b können herabgesetzt werden, wodurch parasitäre Größen und vor allem Kapazitäten weiter verringert werden.

Die jeweilige Kaskode kann alternativ zur Darstellung als Kombination eines Bipolartransistors und eines FET-Transistors oder auch als Doppel-FET-Transistor umgesetzt werden. Prinzipiell ist eine Kaskode sogar ohne Ausleseschaltung mit zwei Auslese-Transistoren 48a-b allein im Zusammenhang mit einer Signalabgriffschaltung 12 denkbar. Das wäre dann ein Beispiel für eine alternative Ausgestaltung des Messpfades 42 in Figur 1, in dem der einfache Messwiderstand durch eine aktive Schaltung ersetzt ist.

Zwischen den beiden Ausführungsformen mit einer Ausleseschaltung, die schon wie in den Figuren 3 und 4 am Eingang 34 der Signalabgriffschaltung 12 oder die wie in den Figuren 5 und 6 die Entkopplung nutzt und am Ausgang angeschlossen ist, kann nach Gesichtspunkten wie Leistungsfähigkeit, Komplexität und Kosten entschieden werden. Beiden Ausführungsformen ist gemeinsam, dass eine Art digitale elektronische Blende entsteht, wenn der Geigerstrom oder Messstrom in dem Ausblendungspfad 46 ohne jegliche Erfassung abfließt. Durch gezielte Arbeitspunktverschiebungen mittels Ansteuerung des Basispotentials werden Transistoren 32, 48, 48a-b vom Linear- in den Sperrbereich verschoben und damit zwischen Messpfad 42 und Ausblendungspfad 46 gewählt. Diese Vorgänge können auch sehr schnell über eine 3V Technik erfolgen. Dabei bleibt jeweils die kurzschlussnahe, niedrige Auskoppelimpedanz der Signalabgriffschaltung 12 an ihrem Eingang 34 auch im abgeblendeten Zustand erhalten, während also auf den Ausblendungspfad 46 geschaltet ist.

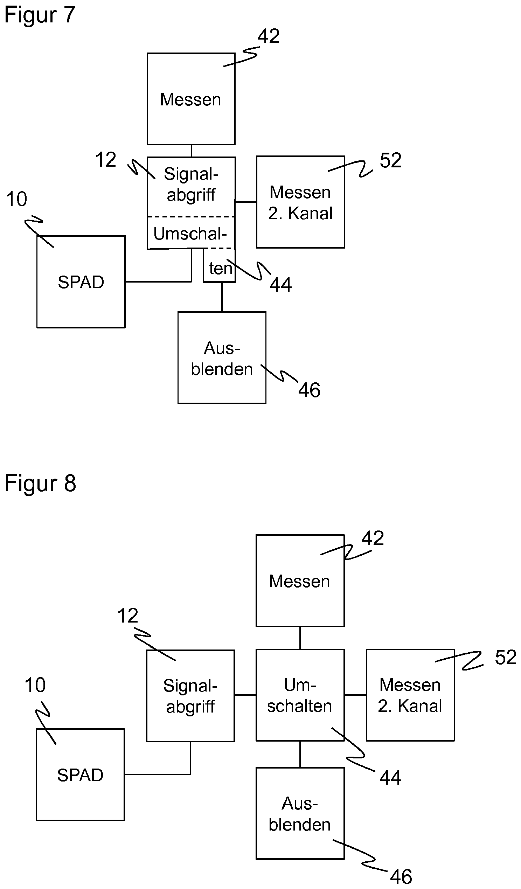

In den bisherigen Ausführungsformen war die Umschaltung auf einen Messpfad 42 und einen Ausblendungspfad 46 beschränkt. Figur 7 zeigt wiederum zunächst als vereinfachtes Blockdiagramm eine Ausführungsform, in der ein weiterer Messpfad 52 hinzukommt. Dabei ist hier wie in Figur 3 das Schalterelement 44 an den Eingang 34 der Signalabgriffschaltung 12 angeschlossen. Das Schalterelement 44 kann in diesem Fall nicht klar von der Signalabgriffschaltung 12 getrennt werden, vielmehr sind einige Komponenten Teil sowohl der Signalabgriffschaltung 12 als auch des Schalterelements 44.

Figur 8 zeigt ebenfalls als vereinfachtes Blockdiagramm eine alternative Ausführungsform mit einem weiteren Messpfad 52, wobei im Unterschied zu Figur 7 das Schalterelement 44 der Signalabgriffschaltung 12 nachgeordnet an dessen Ausgang 36 angeschlossen ist.

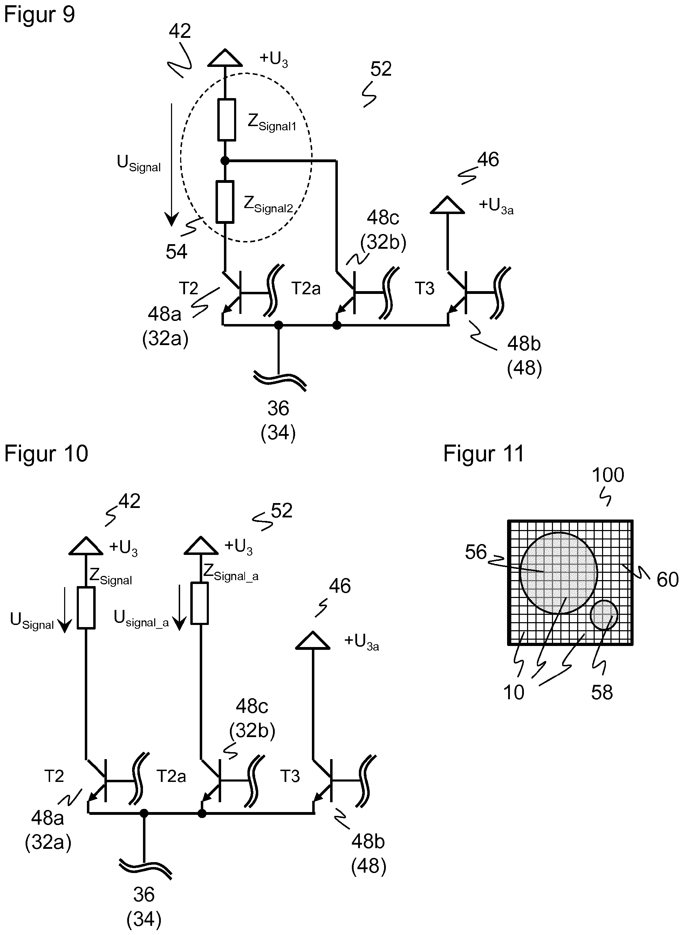

Figur 9 zeigt eine beispielhafte Schaltungsanordnung für das Umschalten auch auf einen weiteren Messpfad 52. Diese Schaltung kann sowohl bei Anschluss an den Ausgang 36 wie bei Anschluss an den Eingang 34 der Signalabgriffschaltung 12 verwendet werden. Dabei ändern sich die Bezeichnungen der Transistoren, was durch Bezugszeichen in Klammern dargestellt ist. Bei Anschluss an den Ausgang 36 kommt zu den Auslese-Transistoren 48a-b für den Messpfad 42 beziehungsweise den Ausblendungspfad 46 ein weiterer Auslese-Transistor 48c für den weiteren Messpfad 52 hinzu. Bei Anschluss an den Eingang 34 umfasst schon die Signalabgriffschaltung 12 zwei Transistoren 32a-b anstelle des Transistors 32, um einen Messstrom an den Messpfad 42 und den weiteren Messpfad 52 führen zu können, und der separate Auslese-Transistor 48 für den Ausblendungspfad 46 bleibt erhalten.

In beiden Fällen liegen alle gemeinsamen Emitter-Punkte der drei Transistoren an einem gemeinsamen Knotenpunkt 34, 36, und die weiteren Erläuterungen können gemeinsam erfolgen, wobei ohne einschränkende Bedeutung die Bezugszeichen bei Anschluss am Ausgang 36 verwendet werden. Wie in früheren Ausführungsbeispielen erfolgt die Umschaltung, indem einer der Transistoren 48a-c auf ein höheres Basispotential gelegt wird, woraufhin die übrigen Transistoren 48a-c vom Linear- in den Sperrbetrieb übergehen. Die basisseitige Ansteuerung der Transistoren 48a-c ist aus Gründen der Übersicht nicht dargestellt und entspricht den früheren Figuren. Die Umschaltung erfolgt nun zwischen drei Zuständen, in denen der Geigerstrom oder der Messstrom wahlweise in den jeweils kollektorseitig angeschlossenen Messpfad 42, Ausblendungspfad 46 oder weiteren Messpfad 52 geführt wird.

Figur 9 zeigt überdies noch eine beispielhafte Schaltung innerhalb des Messpfades 42 und des weiteren Messpfades 52, die ebenfalls rein beispielhaft und unabhängig von der Bereitstellung eines weiteren Messpfades 52 an sich ist. Es ist nämlich eine Abschwächerschaltung 54 mit zwei Einzelimpedanzen Z_{Signal1} und Z_{Signal2} vorgesehen. Der Messabgriff erfolgt am Kollektor des Transistors 48a (T2). Der kollektorseitige Eingriffspunkt des dritten Auslese-Transistors 48c für den weiteren Messpfad 52 befindet sich zwischen den beiden Einzelimpedanzen Z_{Signal1} und Z_{Signal2}. Das Signal in dem weiteren Messpfad 52 ist daher gegenüber dem Messpfad 42 im Verhältnis der beiden Einzelimpedanzen Z_{Signal1} und Z_{Signal2} abgeschwächt. Damit kann bei drohender Übersteuerung, oder umgekehrt zu schwachem Signal, in nachgeordneten Schaltungsteilen gezielt zwischen Messpfad 42 und weiterem Messpfad 52 umgeschaltet werden. Eine auch denkbare Übersättigung schon in den vorgeschalteten Lawinenphotodiodenelementen 10 kann allerdings auf diesem Weg nicht mehr verhindert werden. Die Ausblendung in dem Ausblendungspfad 46 bei Aktivierung des zweiten Auslese-Transistors 48b erfolgt wie bisher. Durch das Einfügen eines dritten Messpfades oder weiterer Messpfade kann analog eine weitere Abstufung des Abschwächers implementiert werden.

Figur 10 zeigt eine alternative beispielhafte Schaltung mit einem weiteren Messpfad 52. Im Unterschied zu Figur 9 ist hier keine Abschwächerschaltung vorgesehen. Dafür können in dem Messpfad 42 und dem weiteren Messpfad 52 unterschiedliche Impedanzen für den Messabgriff verwendet und auf diese Weise unterschiedliche Empfindlichkeiten eingestellt werden. Außerdem können die abgegriffenen Signale aus dem Messpfad 42 und dem weiteren Messpfad 52 separaten Kanälen zugeordnet werden.

Eine mögliche Anwendung des weiteren Messpfades 52 zur Signalabschwächung beziehungsweise für eine abgestufte Empfindlichkeit wurde bereits beschrieben. Ein mehrkanaliger Lichtempfänger lässt sich aber auch auf vielfältige andere Weise nutzen. Beispielhafte Anwendungen sind ein Mess- und ein Referenzkanal, ein Nah- und ein Fernmessbereich oder zwei unterschiedliche Farbkanäle, wobei diese Bezeichnung die Wellenlänge nicht auf das sichtbare Spektrum beschränken soll.

Figur 11 zeigt hierzu eine beispielhafte Aufteilung eines Lichtempfängers 100, der eine Vielzahl von matrixförmig angeordneten Lawinenphotodiodenelementen 10 aufweist. Dabei werden drei Gruppen gebildet, die Lawinenphotodiodenelemente 10 an der erwarteten Position eines großen Lichtflecks 56 beispielsweise für den Nahbereich oder als Messbereich, eines kleinen Lichtflecks 58 beispielsweise für den Fernbereich oder als Referenzbereich und eines auszublendenden Restbereichs 60 in dieser Reihenfolge dem Messpfad 42, dem weiteren Messpfad 52 und dem Ausblendungspfad 46 zuordnen. Die elektronische Ausblendung des nicht genutzten Restbereichs 60 steigert unter anderem die Fremdlicht-Robustheit. Eine Unterteilung in mehr Bereiche ist durch weitere Kanäle, also zusätzliche Pfade analog dem weiteren Messpfad 52 möglich. Damit ist eine echte Auftrennung in weitere Klassen gemeint. Selbstverständlich ist es auch schon durch Nutzen nur eines Pfades 42, 46, 52 möglich, Bereiche aus mehreren nicht zusammenhängenden Teilbereichen auf dem Lichtempfänger 100 zu bilden.

In allen Darstellungen wird der Ausblendungspfad 46 nur dazu genutzt, den Geigerstrom beziehungsweise Messstrom durch direkte kollektorseitige Verbindung mit der Versorgungsspannung ungenutzt zu lassen. Auch in dem Ausblendungspfad 46 kann abweichend davon ein nicht gezeigter Messabgriff vorgesehen sein, beispielsweise eine eigene Messimpedanz. Dadurch kann zusätzliche Signalinformation erfasst, insbesondere die abgeschattete Lichtmenge bestimmt werden.

Die Erfindung wurde anhand von konkreten Ausführungsbeispielen beschrieben. Das ist beispielhaft und nicht abschließend zu verstehen, wobei nachfolgend nur einige denkbare konkrete Abweichungen genannt werden. So wird eine identische Beschaltung für alle Lawinenphotodiodenelemente 10 beschrieben, was auch hinsichtlich der Herstellung und Anwendung übersichtlicher und einfacher, jedoch nicht zwingend erforderlich ist. Gezeigte Spannungs- oder Bezugspotentiale können verschoben oder umgekehrt werden. Die Transistorpolaritäten können geändert werden, etwa PNP statt NPN, und anstelle von Bipolartransistoren MOS- bzw. FET-Transistoren verwendet werden.

## Patentansprüche

1. Lichtempfänger (100) mit einer Vielzahl von Lawinenphotodiodenelementen (10), die jeweils mit einer Vorspannung oberhalb einer Durchbruchspannung vorgespannt und somit in einem Geiger-Modus betrieben sind, um bei Lichtempfang einen Geigerstrom auszulösen, sowie mit einer Vielzahl von Ausleseschaltungen (42, 44, 46), die einzelnen Lawinenphotodiodenelementen (10) oder einer Gruppe von Lawinenphotodiodenelementen (10) zugeordnet sind, um einen bei Lichtempfang erzeugten Geigerstrom auszulesen, **dadurch gekennzeichnet,**
**dass** die Ausleseschaltungen (42, 44, 46) jeweils einen Messpfad (42) und einen Ausblendungspfad (46) sowie ein Schalterelement (44) aufweisen, insbesondere einen Auslese-Transistor (48), um den Geigerstrom oder einen dem Geigerstrom entsprechenden Messstrom wahlweise dem Messpfad (42) oder dem Ausblendungspfad (46) zuzuführen und so gezielt bestimmte Lawinenphotodiodenelemente (10) und damit Bereiche des Lichtempfängers (100) auf den Ausblendungspfad zu schalten, so dass diese Bereiche stummgeschaltet oder jedenfalls anders ausgewertet werden als Lawinenphotodiodenelemente (10), deren Ausleseschaltung (42, 44, 46) auf den Messpfad leitet.

2. Lichtempfänger (100) nach Anspruch 1,
wobei der Ausblendungspfad (46) dafür ausgebildet ist, den Geigerstrom oder den Messstrom ohne Auslesen abfließen zu lassen.

3. Lichtempfänger (100) nach Anspruch 1 oder 2,
wobei für die Ausleseschaltung (42, 44, 46) und das zugehörige einzelne Lawinenphotodiodenelement (10) oder die zugehörige Gruppe von Lawinenphotodiodenelementen (10) eine Signalabgriffschaltung (12) vorgesehen ist, die ein aktives Kopplungselement (32) mit einem Eingang (34), der mit den Lawinenphotodiodenelementen (10) verbunden ist, und einem Ausgang (36) aufweist, das den Geigerstrom am Eingang auf den in Verlauf und Pegel dem Geigerstrom entsprechenden Messstrom abbildet, wobei der Eingang (34) für den Geigerstrom einen virtuellen Kurzschluss gegen ein Potential (Masse; -U_{BE}; U_{const}-U_{BE}) bildet und der Ausgang (36) von dem Eingang (34) entkoppelt ist, wobei das Kopplungselement (32) insbesondere genau einen Signalabgriff-Transistor aufweist.

4. Lichtempfänger (100) nach Anspruch 3,
wobei das Schalterelement (44) mit dem Eingang (34) verbunden ist.

5. Lichtempfänger (100) nach Anspruch 4,
wobei das Schalterelement (44) nur einen Auslese-Transistor (48) aufweist.

6. Lichtempfänger (100) nach Anspruch 5,
wobei die Basisspannung des Signalabgriff-Transistors (32) oder des Auslese-Transistors (48) zur Umschaltung zwischen Messpfad (42) und Ausblendungspfad (46) anpassbar ist.

7. Lichtempfänger (100) nach Anspruch 3,
wobei das Schalterelement (44) mit dem Ausgang (36) verbunden ist.

8. Lichtempfänger (100) nach Anspruch 7,
wobei das Schalterelement (44) mindestens zwei parallel geschaltete Auslese-Transistoren (48a-b) jeweils in Kaskodenschaltung mit dem Signalabgriff-Transistor (32) aufweist.

9. Lichtempfänger (100) nach einem der vorhergehenden Ansprüche,
wobei in dem Ausblendungspfad (46) ein Messabgriff vorgesehen ist.

10. Lichtempfänger (100) nach einem der vorhergehenden Ansprüche,
wobei die Ausleseschaltung (42, 44, 46) mindestens einen weiteren Messpfad (52) aufweist.

11. Lichtempfänger (100) nach Anspruch 10,
wobei Messpfad (42) und weiterer Messpfad (52) jeweils einen Messabgriff mit unterschiedlicher Abschwächung des Geigerstroms oder Messstroms aufweisen.

12. Lichtempfänger (100) nach Anspruch 11,
wobei Messpfad (42) und weiterer Messpfad (52) eine Spannungsabschwächerschaltung oder unterschiedliche Arbeitsimpedanzen aufweisen.

13. Lichtempfänger (100) nach einem der vorhergehenden Ansprüche,
wobei die Lawinenphotodiodenelemente (10) eine Elektrode (28) zum kapazitiven Auskoppeln des Geigerstroms aufweisen, und wobei die Ausleseschaltung (42, 44, 46) mit der Elektrode (28) verbunden ist.

14. Optoelektronischer Sensor mit mindestens einem Lichtempfänger (100) nach einem der vorhergehenden Ansprüche, wobei der Sensor zur Entfernungsmessung nach einem Lichtlaufzeitverfahren und/oder als Codeleser und/oder zur Datenübertragung ausgebildet ist.

15. Verfahren zum Auslesen von Lawinenphotodiodenelementen (10) eines Lichtempfängers (100), die jeweils mit einer Vorspannung oberhalb einer Durchbruchspannung vorgespannt und somit in einem Geiger-Modus betrieben werden, wobei die Lawinenphotodiodenelemente (10) bei Lichtempfang einen Geigerstrom auslösen und der Geigerstrom von einzelnen Lawinenphotodiodenelementen (10) oder Gruppen von Lawinenphotodiodenelementen (10) ausgelesen wird,
**dadurch gekennzeichnet,**
**dass** der Geigerstrom oder ein dem Geigerstrom entsprechender Messstrom mittels Umschalten eines Schalterelements (44) wahlweise einem Messpfad (42) oder einem Ausblendungspfad (46) zugeführt wird und so gezielt bestimmte Lawinenphotodiodenelemente (10) und damit Bereiche des Lichtempfängers (100) auf den Ausblendungspfad geschaltet werden, so dass diese Bereiche stummgeschaltet oder jedenfalls anders ausgewertet werden als Lawinenphotodiodenelemente (10), deren Ausleseschaltung (42, 44, 46) auf den Messpfad leitet.

## Claims

1. A light receiver (100) having a plurality of avalanche photodiode elements (10) each being biased with a bias voltage above a breakdown voltage and thus operated in a Geiger mode in order to trigger a Geiger current upon light reception, and having a plurality of readout circuits (42, 44, 46) associated with individual avalanche photodiode elements (10) or a group of avalanche photodiode elements (10) for reading out a Geiger current generated upon light reception,
**characterized in that** the readout circuits (42, 44, 46) each comprise a measurement path (42) and a blanking path (46) as well as a switching element (44), in particular a readout transistor (48), for selectively supplying the Geiger current, or a measurement current corresponding to the Geiger current, to the measurement path (42) or the blanking path (46) and to thus switch regions of the light receiver (100) to the blanking path (46), so that these regions are muted or at least evaluated in a different manner than avalanche photodiode elements (10) whose readout circuit (42, 44, 46) is connected to the measurement path.

2. The light receiver (100) according to claim 1,
wherein the blanking path (46) is configured to let the Geiger current or the measurement current be drained without reading out.

3. The light receiver (100) according to claim 1 or 2,
wherein a signal detection circuit (12) is provided for the readout circuit (42, 44, 46) and the associated individual avalanche photodiode element (10) or the associated group of avalanche photodiode elements (10), the signal detection circuit (12) comprising an active coupling element (32) having an input (34) connected to the avalanche photodiode elements (10) and an output (36) which maps the Geiger current at the input (34) to the measurement current corresponding to the Geiger current in its course and level, wherein the input (34) forms a virtual short-circuit for the Geiger current to a potential (ground; -U_{BE}; U_{const}-U_{BE}) and the output (36) is decoupled from the input (34), wherein in particular the coupling element (32) comprises exactly one signal detection transistor.

4. The light receiver (100) according to claim 3,
wherein the switching element (44) is connected to the input (34).

5. The light receiver (100) according to claim 4,
wherein the switching element (44) comprises only one readout transistor (48).

6. The light receiver (100) according to claim 5,
wherein the base voltage of the signal detection transistor (32) or the readout transistor (48) is adaptable for switching between the measurement path (42) and the blanking path (46).

7. The light receiver (100) according to claim 3,
wherein the switching element (44) is connected to the output (36).

8. The light receiver (100) according to claim 7,
wherein the switching element (44) comprises at least two parallel readout transistors (48a-b) each in a cascode circuit with the signal detection transistor (32).

9. The light receiver (100) according to any of the preceding claims,
wherein the blanking path (46) comprises a measurement tap.

10. The light receiver (100) according to any of the preceding claims,
wherein the readout circuit (42, 44, 46) comprises at least one further measurement path (52).

11. The light receiver (100) according to claim 10,
wherein measurement path (42) and further measurement path (52) each have a measurement tap, the measurement taps having different attenuations of the Geiger current or the measurement current.

12. The light receiver (100) according to claim 11,
wherein measurement path (42) and further measurement path (52) comprise a voltage attenuation circuit or different working impedances.

13. The light receiver (100) according to any of the preceding claims,
wherein the avalanche photodiode elements (10) comprise an electrode (28) for providing the Geiger current with capacitive coupling, and wherein the readout circuit (42, 44, 46) is connected to the electrode (28).

14. An optoelectronic sensor having at least one light receiver (100) according to any of the preceding claims, wherein the sensor is configured for measuring distances according to a time of flight method and/or as a code reader and/or for data transmission.

15. A method for reading out avalanche photodiode elements (10) of a light receiver (100), each being biased with a bias voltage above a breakdown voltage and thus operated in a Geiger mode, wherein the avalanche photodiode elements (10) trigger a Geiger current upon light reception and wherein the Geiger current from individual avalanche photodiode elements (10) or groups of avalanche photodiode elements (10) is read out,
**characterized in that** the Geiger current, or a measurement current corresponding to the Geiger current, is selectively supplied to a measurement path (42) or to a blanking path (46) by switching a switching element (44), and thus regions of the light receiver (100) are switched to the blanking path (46), so that these regions are muted or at least evaluated in a different manner than avalanche photodiode elements (10) whose readout circuit (42, 44, 46) is connected to the measurement path.

## Revendications

1. Récepteur de lumière (100) comportant une multitude d'éléments formant photodiodes à avalanche (10) qui sont chacun polarisés avec une tension de polarisation supérieure à une tension de claquage et qui fonctionnent donc en mode Geiger pour déclencher un courant Geiger lors de la réception de lumière, et comportant une multitude de circuits de lecture (42, 44, 46) qui sont associés à des éléments formant photodiodes à avalanche (10) individuels ou à un groupe d'éléments formant photodiodes à avalanche (10) pour lire un courant Geiger généré lors de la réception de lumière, **caractérisé en ce que**
les circuits de lecture (42, 44, 46) présentent chacun un trajet de mesure (42) et un trajet de suppression (46) ainsi qu'un élément commutateur (44), en particulier un transistor de lecture (48), pour amener le courant Geiger ou un courant de mesure correspondant au courant Geiger au choix vers le trajet de mesure (42) ou vers le trajet de suppression (46) et pour commuter ainsi de façon ciblée certains éléments formant photodiodes à avalanche (10) et ainsi certaines zones du récepteur de lumière (100) sur le trajet de suppression, de sorte que ces zones sont commutées en silence ou sont en tout cas évaluées d'une autre manière que les éléments formant photodiodes à avalanche (10) dont le circuit de lecture (42, 44, 46) mène vers le trajet de mesure.

2. Récepteur de lumière (100) selon la revendication 1,
dans lequel le trajet de suppression (46) est réalisé pour laisser passer sans lecture le courant Geiger ou le courant de mesure.

3. Récepteur de lumière (100) selon la revendication 1 ou 2,
dans lequel pour le circuit de lecture (42, 44, 46) et pour l'élément formant photodiode à avalanche (10) individuel associé ou pour le groupe associé d'éléments formant photodiodes à avalanche (10), il est prévu un circuit de captage de signal (12) qui présente un élément de couplage (32) actif muni d'une entrée (34) connectée aux éléments formant photodiodes à avalanche (10) et d'une sortie (36), qui reproduit le courant Geiger à l'entrée sur le courant de mesure correspondant au courant Geiger quant à l'évolution et au niveau, l'entrée (34) formant un court-circuit virtuel contre un potentiel (masse ; -U_{BE} ; U_{const} - U_{BE}) pour le courant Geiger et la sortie (36) étant découplée de l'entrée (34), l'élément de couplage (32) comprenant en particulier précisément un transistor de captage de signal.

4. Récepteur de lumière (100) selon la revendication 3,
dans lequel l'élément commutateur (44) est connecté à l'entrée (34).

5. Récepteur de lumière (100) selon la revendication 4,
dans lequel l'élément commutateur (44) ne présente qu'un transistor de lecture (48).

6. Récepteur de lumière (100) selon la revendication 5,
dans lequel la tension de base du transistor de captage de signal (32) ou du transistor de lecture (48) est adaptable pour commuter entre le trajet de mesure (42) et le trajet de suppression (46).

7. Récepteur de lumière (100) selon la revendication 3,
dans lequel l'élément commutateur (44) est connecté à la sortie (36).

8. Récepteur de lumière (100) selon la revendication 7,
dans lequel l'élément commutateur (44) comprend au moins deux transistors de lecture (48a - b) branchés en parallèle et agencés chacun en circuit cascode avec le transistor de captage de signal (32).

9. Récepteur de lumière (100) selon l'une des revendications précédentes, dans lequel un captage de mesure est prévu dans le trajet de suppression (46).

10. Récepteur de lumière (100) selon l'une des revendications précédentes, dans lequel le circuit de lecture (42, 44, 46) présente au moins un autre trajet de mesure (52).

11. Récepteur de lumière (100) selon la revendication 10,
dans lequel le trajet de mesure (42) et l'autre trajet de mesure (52) présentent chacun un captage de mesure avec atténuation différente du courant Geiger ou du courant de mesure.

12. Récepteur de lumière (100) selon la revendication 11,
dans lequel le trajet de mesure (42) et l'autre trajet de mesure (52) présentent un circuit d'atténuation de tension ou bien différentes impédances de travail.

13. Récepteur de lumière (100) selon l'une des revendications précédentes, dans lequel les éléments formant photodiodes à avalanche (10) présentent une électrode (28) pour le découplage capacitif du courant Geiger, et le circuit de lecture (42, 44, 46) est connecté à l'électrode (28).

14. Capteur optoélectronique comportant au moins un récepteur de lumière (100) selon l'une des revendications précédentes, dans lequel le capteur est réalisé pour la mesure de distance selon la méthode du temps de vol de lumière et/ou sous forme de lecteur de code et/ou pour la transmission de données.

15. Procédé de lecture d'éléments formant photodiodes à avalanche (10) d'un récepteur de lumière (100), qui sont chacun polarisés avec une tension de polarisation supérieure à une tension de claquage et qui fonctionnent donc en mode Geiger, les éléments formant photodiodes à avalanche (10) déclenchant un courant Geiger lors de la réception de lumière, et le courant Geiger étant lu par des éléments formant photodiodes à avalanche (10) individuels ou par des groupes d'éléments formant photodiodes à avalanche (10),
**caractérisé en ce que** le courant Geiger ou un courant de mesure correspondant au courant Geiger est amené au choix vers un trajet de mesure (42) ou vers un trajet de suppression (46) par commutation d'un élément commutateur (44), et ainsi certains éléments formant photodiodes à avalanche (10) et donc certaines zones du récepteur de lumière (100) sont commutés de façon ciblée sur le trajet de suppression, de sorte que ces zones sont commutées en silence ou sont en tout cas évaluées d'une autre manière que les éléments formant photodiodes à avalanche (10) dont le circuit de lecture (42, 44, 46) mène vers le trajet de mesure.
